# FASCICULE DE BREVET EUROPEEN

(11) **EP 0 678 697 B1**
(45) Date de publication et mention de la délivrance du brevet: **24.06.1998**
(21) Numéro de dépôt: 95105746.2
(22) Date de dépôt: 18.04.1995
(51) Int. Cl.: F16L 37/084, F16L 37/42

(54) **Coupleur rapide pour conduit sous pression à désaccouplement contrôlé**
Schnellkupplung zum kontrollierten Trennen von unter Druck stehenden Rohren
Quick acting coupling for pipes under pressure and having a control over its disconnection

(30) Priorité: 21.04.1994 FR 9404783
(43) Date de publication de la demande: 25.10.1995
(73) Titulaire: SOCIETE Y.T.O., F-75001 Paris (FR)
(72) Inventeur: Larbouisson, Patrick, c/o Société Y.T.O., F-75001 Paris (FR)
(74) Mandataire: Kügele, Bernhard

(56) Documents cités:
- FR-A- 1 503 989
- FR-A- 2 166 770
- FR-A- 2 511 115
- US-A- 2 092 116

## Description

La présente invention a trait à un coupleur rapide, comportant une pièce mâle et une pièce femelle dans laquelle la pièce mâle peut s'embrocher, la pièce femelle étant munie d'un verrou comportant deux dents d'engagement disposées de part et d'autre de la pièce mâle pour coopérer avec des moyens d'engagement de la pièce mâle de manière à produire un dégagement de la pièce mâle de la pièce femelle en deux phases correspondant à un seul enfoncement et un seul relâchement dudit verrou, ladite pièce femelle comportant un clapet d'obturation qui est sollicité dans une position de fermeture lorsque les pièces mâle et femelle sont désaccouplées et qui est ouvert par la poussée de la pièce mâle lors de son accouplement dans la pièce femelle, le clapet d'obturation comprenant une partie cylindrique vide, les deux dents étant séparées l'une de l'autre axialement d'une distance suffisante pour permettre un recul de la pièce mâle par rapport à la pièce femelle lors d'un seul enfoncement au verrou pour fermer le clapet.

Un tel coupleur rapide est décrit dans FR-A-2 514 855, dans lequel le verrou comporte trois dents de blocage, dont deux sont arrangées de façon séparée dans le sens axial du coupleur à l'intérieur d'un alésage radial du verrou, de façon à délimiter une certaine distance axiale dans laquelle la pièce mâle peut se déplacer, lesdites deux dents étant arrangées du même côté de l'ouverture radiale du verrou par rapport à la pièce mâle qui est insérée au travers dudit trou radial du verrou, et une troisième dent étant arrangée à une position axialement entre les deux premières dents et du côté opposé du trou radial du verrou.

De cette façon, un épaulement formé à la surface extérieure de la pièce mâle est verrouillé dans sa position d'accouplement complet par une première entre les premières deux dents, et une première opération d'enfoncement du verrou dégage cette première dent de l'épaulement de la pièce mâle en même temps que la troisième dent vient s'engager dans le passage axial de l'épaulement de la pièce mâle lors de son extraction afin de permettre que la pièce mâle recule d'une distance axiale correspondant à la distance axiale entre la première et la troisième dent.

Ensuite, le verrou est relâché afin qu'il retourne dans la position initiale entraîné par un ressort, et la troisième dent se dégage de l'épaulement de la pièce mâle suite à ce relâchement en même temps que la deuxième des premières deux dents s'engage dans le passage axial de l'épaulement de la pièce mâle afin de permettre que ladite pièce mâle recule de nouveau d'une distance axiale correspondant à la différence des positions axiales entre la troisième et la deuxième dent qui retient la pièce mâle dans une troisième position axiale avant que ladite pièce mâle soit finalement dégagée par une deuxième opération d'enfoncement du verrou qui dégage la deuxième dent de l'épaulement de la pièce mâle permettant l'extraction complète de la pièce mâle à la suite de quoi le verrou est relâché et retourne dans sa position initiale.

De cette façon, la pièce mâle est dégagée de son accouplement avec la pièce femelle par une séquence de deux poussées sur le verrou, une première poussée permettant un désaccouplement partiel lors duquel la partie du fluide sous pression qui se trouve en aval du clapet peut s'échapper du coupleur avant le désaccouplement complet des pièces mâle et femelle, ceci ayant l'avantage d'éviter un coup de fouet occasionné par la pression résiduelle lors du désaccouplement durant la période avant la fermeture complète du clapet.

Toutefois, on peut considérer comme un inconvénient que le désaccouplement complet nécessite une double action du verrou avec dégagement graduel de la pièce mâle, et un premier but de la présente invention est donc de créer un coupleur rapide comportant un verrou qui permet un désaccouplement contrôlé des pièces mâle et femelle lors d'une seule poussée sur le verrou tout en maintenant les avantages de pouvoir effectuer un dégagement de la pression résiduelle avant la libération complète de la pièce mâle par le relâchement du verrou.

FR-A-2 511 115 décrit un coupleur comportant deux verrous indépendents axialement décalés nécessitant une double manoeuvre.

FR-A-1 503 989 décrit un système à un seul verrou produisant un recul en deux étapes de la pièce mâle lors d'un seul actionnement du poussoir.

Toutefois, l'engagement de la pièce mâle dans le joint d'étanchéité de la pièce femelle est telle, que la pièce mâle n'est pas entièrement dégagée de ce joint ou de la partie de guidage axial respectivement lorsqu'il se trouve dans sa position intermédiaire, ce qui ne permet pas un dégagement rapide de la pression résiduelle en aval du clapet de la pièce femelle ceci pouvant résulter en un coup de fouet lorsqu'on relâche le verrou trop vite.

Les inconvénients de l'art antérieur sont palliés par un coupleur rapide comme décrit ci-dessus qui est en outre caractérisé en ce que la partie cylindrique vide du clapet d'obturation reçoit une partie frontale de la pièce mâle et comporte un joint d'étanchéité destiné à rendre étanche l'accouplement entre le clapet et la pièce mâle, cette partie cylindrique comportant plusieurs ouvertures radiales en aval dudit joint d'étanchéité et en ce que le recul de la pièce mâle par rapport à la pièce femelle lors d'un seul enfoncement du verrou pour fermer le clapet dégage les ouvertures pour permettre l'échappement de fluide sous pression en aval du clapet fermé vers l'extérieur, tout en retenant la pièce mâle dans la pièce femelle, le relâchement du verrou entraînant le dégagement de la pièce mâle du verrou.

Selon une forme de réalisation preférée de l'invention, le coupleur peut comporter une partie mâle et une partie femelle dans laquelle la partie mâle peut s'embrocher lors de l'accouplement, la partie femelle comportant un clapet d'obturation qui est sollicité dans une position de fermeture lorsque les pièces mâle et femelle sont désaccouplées et qui est ouvert par la poussée de la pièce mâle lors de son accouplement dans la pièce femelle, la pièce femelle comportant un verrou susceptible d'être déplacé dans une direction perpendiculaire par rapport à l'axe longitudinal de la pièce femelle entre une position de repos et une position de travail, ledit verrou comportant des dents de blocage s'engageant avec une rainure ou nervure circonférentielle de la pièce mâle de sorte que le déplacement du verrou peut bloquer la rainure ou nervure contre un déplacement dans un sens axial ou la libérer respectivement, la partie mâle comportant un épaulement entre une nervure circonférentielle et une rainure circonférentielle, une dent étant dégagée du passage axial de l'épaulement et la seconde dent se trouvant dans le passage axial de l'épaulement lorsque le verrou se trouve dans sa position de repos, alors que la première dent se trouve dans le passage axial de l'épaulement et la seconde dent se trouve dégagée dudit passage axial lorsque le verrou se trouve dans sa position de travail, ledit verrou comportant deux dents de blocage qui se trouvent séparées l'une de l'autre dans le sens axial d'une distance suffisante pour permettre un recul de la partie mâle par rapport à la partie femelle lors d'un seul enfoncement du verrou pour à la fois fermer le clapet et dégager la pièce mâle du clapet pour permettre l'échappement de fluide résiduel sous pression en aval du clapet fermé, tout en retenant la pièce mâle dans la pièce femelle, le relâchement du verrou entraînant le dégagement de la pièce mâle grâce à l'escamotage de la première dent.

Selon une autre forme de la présente invention, la partie femelle peut comporter un second joint d'étanchéité destiné à rendre étanche l'intérieur de la pièce femelle vers son extérieur lorsque le clapet se trouve dans une position ouverte et de rendre en plus étanche ledit clapet lorsqu'il se trouve dans sa position fermée.

Selon une forme particulièrement préférée de la présente invention, le clapet peut comporter un cylindre vide comportant une partie de tête fermée, et une partie cylindrique vide munie de trous obturable par ledit premier joint d'étanchéité lorsque le clapet est fermé, ladite partie cylindrique comportant deux parties à diamètre différent d'un alésage axial formant entre elles un épaulement et une rainure circonférentielle qui sert de siège pour le premier joint d'échanchéité, la partie à diamètre supérieur recevant une partie frontale de la pièce mâle.

Dans cette forme de réalisation, la partie femelle peut comporter un ressort sollicitant le clapet dans sa position de fermeture.

La partie de tête du clapet peut comporter une surface tronconique qui est susceptible d'épouser une surface tronconique correspondante du premier joint d'étanchéité lorsque le clapet est fermé.

Dans cette même forme de réalisation d'un coupleur selon la présente invention, la partie à diamètre supérieur de la partie cylindrique du clapet peut comporter plusieurs alésages radiaux en aval du premier joint d'étanchéité permettant, lorsque le clapet est fermé et la partie mâle vient de se dégager de ladite partie à diamètre supérieur de la partie cylindrique du clapet, de dégager le fluide résiduel sous pression qui se trouve à l'intérieur de la partie cylindrique du clapet vers l'extérieur.

De façon avantageuse, la partie femelle du coupleur selon l'invention peut comporter en une position avale par rapport au clapet, un alésage radial recevant le verrou qui comporte un cylindre percé d'un trou radial pour le passage de la partie mâle.

Selon une forme d'exécution préférée de l'invention, le trou radial du verrou peut comporter des projections saillant vers l'intérieur du trou et formant lesdites dents de blocage.

Avantageusement, l'alésage radial de la partie femelle s'ouvre d'un côté de la partie femelle par une ouverture suffisamment grande pour le passage du verrou et à l'extrémité opposée dudit alésage radial de la partie femelle se trouve une ouverture plus petite en communication avec les ouvertures radiales de la partie à diamètre supérieur de la partie cylindrique du clapet pour permettre l'échappement du fluide résiduel de l'intérieur du clapet vers l'extérieur de la partie femelle avant le désaccouplement complet des parties mâle et femelle.

Une autre ouverture pour l'échappement du fluide et en communication avec les ouvertures radiales de la partie cylindrique vide du clapet peut être prévue par un alésage parallèle à l'axe dans la pièce femelle.

L'invention va maintenant être décrite en détail en se référant aux dessins à titre d'exemple.
La figure 1 montre un coupleur rapide selon l'invention dans une position complètement accouplée,
La figure 2 montre le même coupleur dans une position partiellement dégagée, permettant l'échappement du fluide sous pression tout en maintenant la partie mâle dans une position rétractée lors d'une poussée sur le verrou, et
La figure 3 montre le coupleur de la figure 2 une fois que le fluide sous pression est dégagé, et que le verrou est retourné dans sa position initiale.
La figure 4 montre le même coupleur dans une série de six étapes commençant avec une position juste avant l'introduction de la pièce mâle dans la pièce femelle jusqu'à la position de dégagement correspondant à la figure 3.

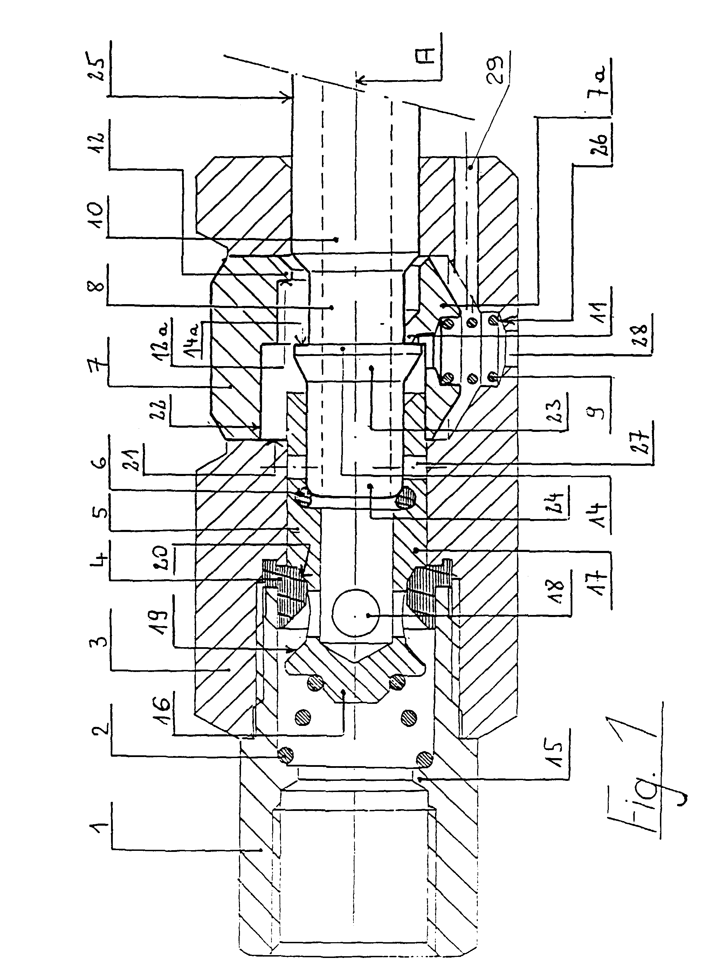

En se retournant maintenant vers la figure 1, on voit un coupleur selon la présente invention dans l'état complètement accouplé, le côté gauche de la figure représentant le côté amont où se trouve une source de fluide sous pression, et le côté droit représentant le côté aval vers lequel le fluide sous pression s'écoule suite à l'accouplement complet du coupleur.

La partie femelle comporte une première douille 3, dite extérieure, qui comporte de son côté amont un filetage intérieur ainsi qu'une seconde douille 1 comportant sur son côté aval un filetage extérieur qui est vissé dans le filetage intérieur de la douille extérieure en formant un logement pour un joint d'étanchéité 4 qui est en saillie vers l'intérieur des deux douilles.

La douille intérieure 1 comporte un épaulement 15 formant un siège pour un ressort 2.

A l'intérieur de la douille extérieure et partiellement également à l'intérieur de la douille intérieure se trouve un clapet 5 comportant une partie de tête 16 ainsi qu'une partie cylindrique 17 qui est fermée de son côté amont par ladite partie de tête 16, ledit clapet 5 étant disposé de façon axialement coulissante à l'intérieur d'une ouverture axiale de la douille extérieure dont le diamètre intérieur est sensiblement égal au diamètre extérieur de la partie cylindrique 17 du clapet 5 de façon à permettre un guidage exact du clapet 5 lors de son mouvement axial à l'intérieur de la douille extérieure 3 durant les différentes étapes d'accouplement et de désaccouplement entre les pièces mâle et femelle.

A son extrémité en amont la partie cylindrique 17 comporte des ouvertures radiales 18, et la partie de tête 16 d'un côté ainsi que la partie cylindrique de l'autre côté de ces ouvertures comportent une surface tronconique 19 et une surface annulaire respectivement qui est formée par une génératrice polygonale 20, susceptibles d'épouser une des deux surfaces correspondantes du joint d'étanchéité 4 lors de la position d'ouverture ou fermeture du clapet respectivement.

La figure 1 montre la position d'ouverture du clapet 5 où la surface "polygonale" est en contact avec le joint d'étanchéité 4 de façon à ce que les ouvertures 18 soient ouvertes et permettent le passage d'un fluide, sous pression ou non, à partir du côté amont de la pièce femelle jusqu'à l'intérieur du clapet en passant par les ouvertures 18.

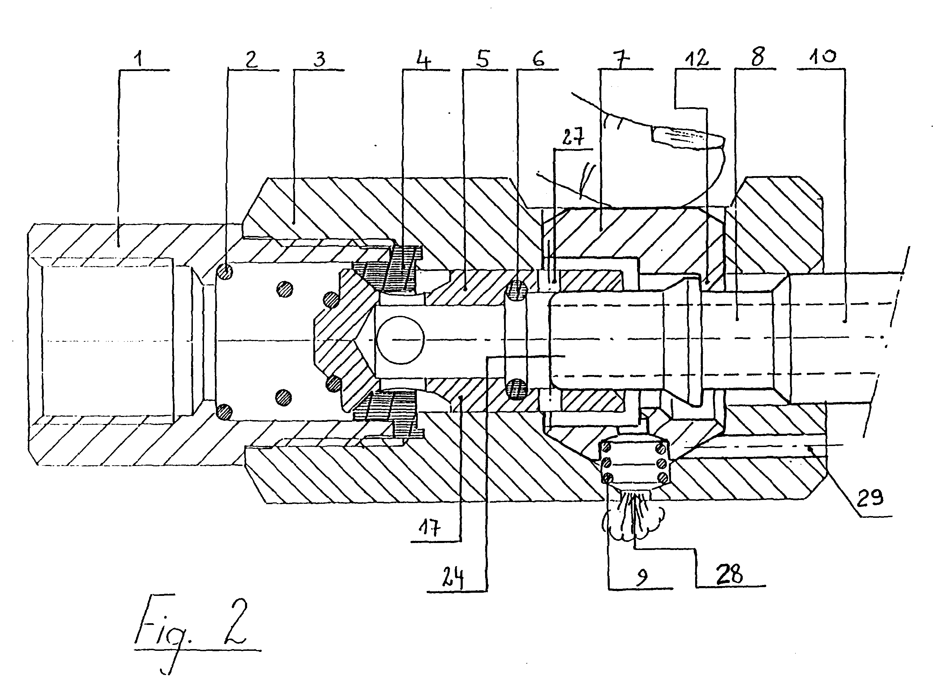

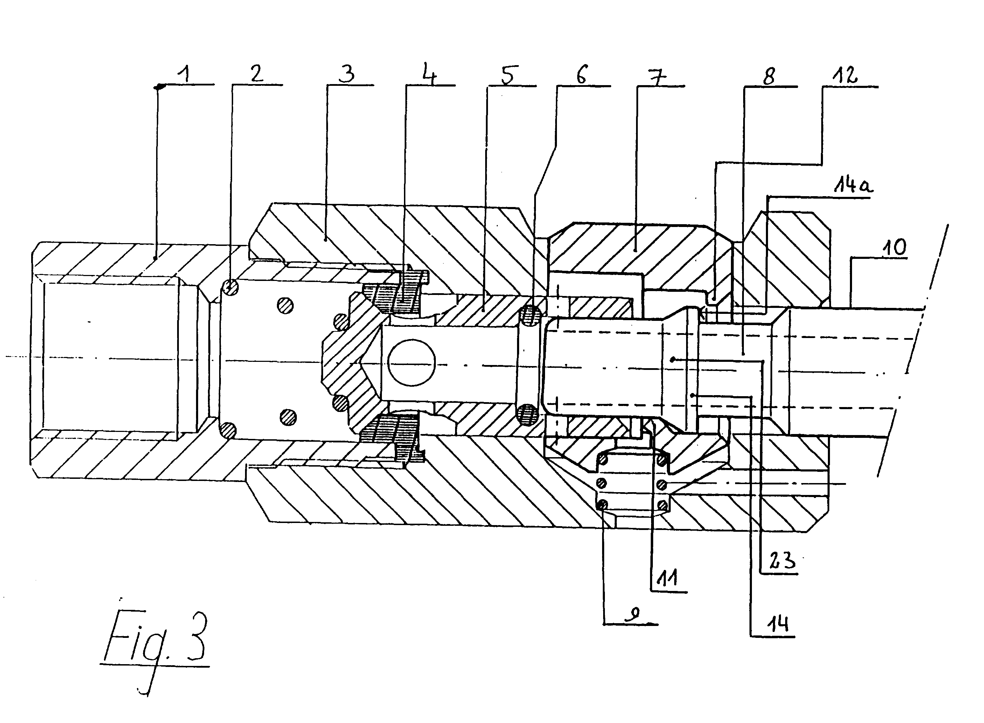

Les figures 2 et 3 montrent des positions du coupleur dans lesquelles le clapet est fermé, positions dans lesquelles la surface tronconique 19 de l'élément de tête 16 épouse la surface tronconique du joint d'étanchéité 4 de façon à fermer hermétiquement la partie de la pièce femelle qui se trouve en amont du clapet.

La partie cylindrique 17 du clapet 5 comporte un alésage intérieur comportant deux sections à diamètre différent, l'intersection de ces deux parties formant un épaulement suivi d'une rainure circonférentielle dans laquelle se loge un joint d'étanchéité 6 qui est destiné à rendre étanche l'intérieur du clapet 5 et l'intérieur de la pièce mâle 10 vers l'alésage de la douille extérieure lors de l'accouplement complet de la partie mâle 10 à l'intérieur de la partie femelle.

La douille extérieure 3 comporte un alésage radial 21 de diamètre supérieur au diamètre de son alésage axial, et ledit alésage radial loge un verrou de forme cylindrique qui comporte de son côté un alésage radial 22 qui se trouve dans une position plus ou moins coaxiale avec l'alésage axial de la douille extérieure 3, afin de permettre ou non le passage de la partie mâle 10 au travers de l'alésage radial 22 du verrou.

La pièce mâle 10 comporte une extrémité d'introduction 24 comportant un diamètre extérieur sensiblement égal au diamètre intérieur de la partie à diamètre supérieur de la partie cylindrique 17 du clapet 5 de façon à ce que l'extrémité 24 de l'élément mâle 10 peut être introduite dans la partie cylindrique 17 du clapet jusqu'à ce qu'elle bute contre le joint d'étanchéité 6.

Quelque peu en aval de l'extrémité d'introduction 24 de la partie mâle 10, celle-ci comporte une nervure circonférentielle 14 accompagnée d'une partie tronconique 23 formant une rampe dont le diamètre maximal correspond au diamètre extérieur de la nervure 14, et ladite nervure 14 est suivie dans le sens aval par une large rainure 8 qui s'étend jusqu'à une partie épaisse 25 de la partie mâle 10, une rampe en forme tronconique étant formée entre la rainure 8 et la partie 25.

L'alésage radial 22 du verrou 7 comporte une première dent 12 située du côté d'une extrémité accessible du verrou 7, alors qu'une deuxième dent 11 se trouve diamètralement opposée à la première dent 12 à proximité d'une extrémité intérieure 7a du verrou 7.

Un ressort 9 s'appuie sur un épaulement 26 de l'alésage radial 21 de la douille extérieure 3, pour solliciter le verrou 7 dans une position de repos comme illustrée en figure 1.

Dans cette position de repos, la dent 12 se trouve à une distance radiale de l'axe A du coupleur, distance qui dégage la dent 12 du passage axial de la nervure 14 de la pièce mâle 10.

Dans cette même position de repos du verrou 7 comme indiqué en figure 1, la seconde dent 11 se trouve engagée dans le passage de la rainure circonférentielle 14 ainsi que de la rampe 23 de la partie mâle 10 de façon à permettre le blocage de la pièce mâle 10 dans sa position complètement accouplée comme illustrée en figure 1, en s'appuyant contre l'épaulement 14a de la nervure 14, ou comme indiqué dans la figure 3 permettant néanmoins l'introduction de la pièce mâle dans la pièce femelle en faisant glisser la rampe 23 sur la dent 11, glissement lors duquel le verrou 7 est entraîné vers sa position enfoncée dite position de travail, jusqu'à ce que la dent 11 s'encliquette derrière la rainure circonférentielle 14 lors de l'accouplement complet comme indiqué en figure 1.

La partie à diamètre supérieur de la partie cylindrique 17 du clapet 5 comporte en aval du joint d'étanchéité 6 des ouvertures radiales 27 qui permettent, dans la position fermée du clapet 5 comme indiqué dans les figures 2 et 3, la communication entre l'intérieur de la partie cylindrique 17 et l'alésage radial 21 du verrou 7, ledit alésage radial 21 comportant en outre une ouverture 28 dans la proximité de l'épaulement 26 qui sert de siège pour le ressort 9, de sorte qu'une pression résiduelle du fluide contenu à l'intérieur de la partie cylindrique 17 du clapet 5 et à l'intérieur de la partie mâle 10 ainsi que dans tous les conduits avals puisse s'échapper vers l'extérieur durant une phase d'opération du coupleur qui est illustrée en figure 2.

Lorsque l'on souhaite un désaccouplement des parties mâle et femelle, on exerce une pression manuelle ou mécanique sur l'extrémité accessible du verrou 7 de sorte que la dent 11 qui est située à proximité de l'extrémité intérieure du verrou 7 se dégage de la nervure 14, en même temps que la dent 12 s'engage dans l'espace de passage de la nervure 14, toutefois cette dent 12 se trouve à une certaine distance axiale en aval de la dent 11.

Un tel enfoncement du verrou 7 permet donc un recul de la pièce mâle sous la pression du fluide intérieur ou simplement par traction manuelle si le fluide intérieur n'est pas sous pression, jusqu'à une position axiale dans laquelle l'épaulement 14a de la nervure 14 bute contre l'épaulement 12a de la dent 12, position dans laquelle la partie mâle 10 est maintenue aussi longtemps que la verrou 7 reste enfoncé.

Durant ce recul, dont la position finale est représentée en figure 2, le clapet est poussé dans sa position fermée par le ressort 2 et par la pression du fluide en amont et l'extrémité 24 de la partie mâle 10 se dégage à la fois du joint d'étanchéité 6 et au moins partiellement des ouvertures radiales 27 de la partie cylindrique 17 du clapet afin de permettre l'échappement des fluides sous pression qui se trouvent en aval du clapet au travers des ouvertures 27, de l'alésage radial 21 du verrou 7 et finalement de l'ouverture 28 afin d'enlever toute force occasionnée par la pression du fluide situé en aval du clapet 5, et permettant un dégagement complet de la pièce mâle par le recul de la dent 12 dans sa position initiale correspondant à la position de repos du verrou 7 illustrée en figures 1 et 3, sans le danger d'un coup de fouet qui se produit normalement lorsqu'un désaccouplement de la pièce mâle est permis sans restriction tant que les conduits en aval du clapet 5 sont encore sous pression. Un alésage 29 parallèle à l'axe est prévu dans la partie frontale de la pièce femelle faisant office d'une seconde voie d'échappement de la pression, utile au cas où l'ouverture 28 serait accidentellement bouclée par la main de l'opérateur.

Dans la position indiquée en figure 3, l'intérieur des conduits en aval du clapet 5 est sans pression et la partie mâle 10 peut être retirée manuellement ou bien remise dans sa position d'accouplement complet par simple poussée de la pièce mâle qui produit un glissement de la dent 11 le long de la rampe 23 jusqu'à ce qu'il s'encliquette derrière l'épaulement 14a de la nervure circonférentielle 14 de la pièce mâle.

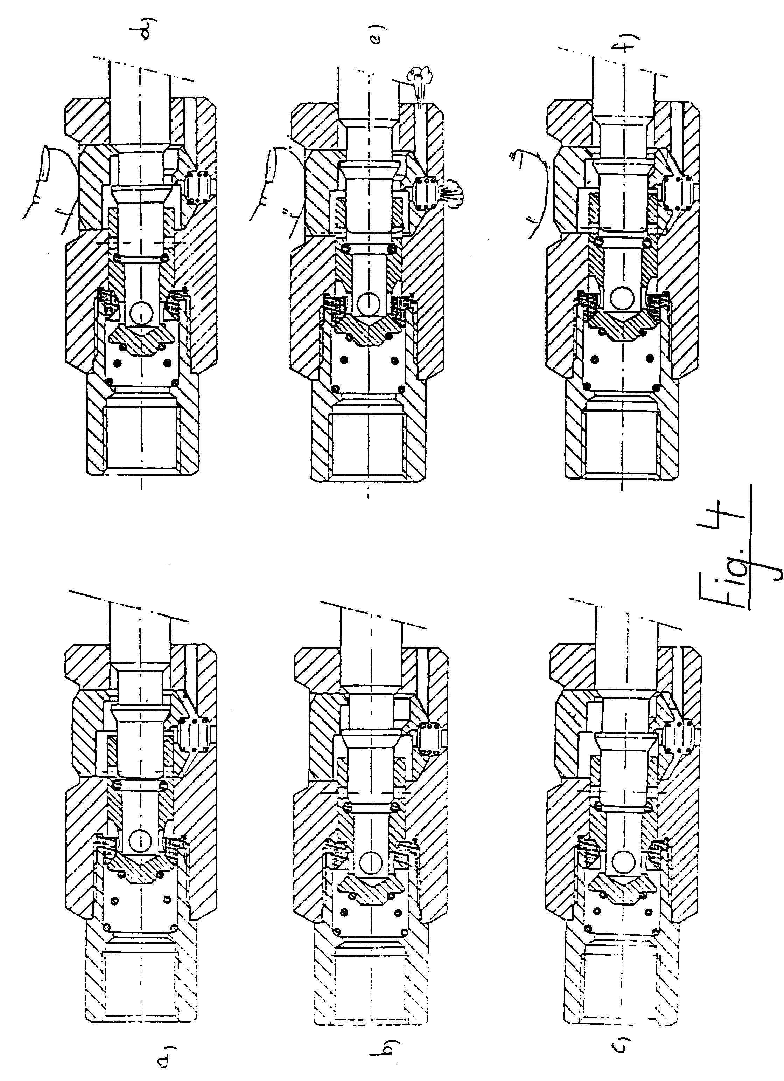

Les figures 4 montrent une suite d'étapes d'accouplement et de désaccouplement du coupleur illustré en figures 1 à 3, la position a) montrant la phase juste avant l'accouplement complet, phase dans laquelle le clapet est encore fermé et le verrou est en position de repos.

En b) la pièce mâle est presque entièrement introduite dans la pièce femelle, le clapet est ouvert, l'étanchéité entre la pièce mâle et le clapet est établie par le second joint d'étanchéité et la seconde dent est dans une position juste avant de s'encliqueter derrière la nervure circonférentielle de la pièce mâle.

Dans la position c), le clapet est ouvert et la pièce mâle est bloquée dans sa position complètement accouplée par la seconde dent qui vient de s'encliqueter derrière la nervure circonférentielle.

En position d), le verrou a été enfoncé afin de dégager la seconde dent de la nervure circonférentielle et dès que ce dégagement est complété, le clapet est fermé sous l'action de son ressort, et la pièce mâle recule jusqu'à l'appui de la nervure circonférentielle contre la première dent du verrou qui se situe du côté de l'extrémité accessible de ce verrou, cette position étant illustrée en e).

Dans cette position, les fluides sous pression contenus dans les conduits en aval du clapet peuvent s'échapper afin de rendre la pièce mâle inerte.

Ensuite en position f), on a relâché le verrou de façon à ce que la seconde dent s'appuie sur l'extrémité d'introduction de la pièce mâle en amont de la nervure circonférentielle de façon à ce que la pièce mâle puisse être retirée complètement de la pièce femelle.

Evidemment, le clapet qui a été fermé lors de la phase d) reste également fermé lors des phases e) et f).

L'invention a été décrite ci-dessus en s'appuyant sur une forme de réalisation possible, étant entendu que de nombreuses modifications peuvent être apportées par l'homme du métier sans sortir de l'esprit de l'invention.

Cet esprit de l'invention réside dans le principe de prévoir un désaccouplement complet d'un coupleur par une seule poussée sur le verrou et son relâchement, de façon à ce que l'enfoncement dudit verrou permet un dégagement partiel entre les pièces mâle et femelle du coupleur, alors que le relâchement suivant du verrou permet le dégagement complet des deux pièces.

La première phase de relâchement partiel produit un positionnement intermédiaire de la pièce mâle dans la pièce femelle durant laquelle la pression de tout fluide en aval du clapet de la pièce femelle peut rapidement et sûrement s'échapper avant que la seconde phase de désengagement complet puisse être effectuée.

Pour permettre l'échappement du fluide sous pression en aval du clapet de la pièce femelle, il est nécessaire de prévoir un trajet de recul pour la pièce mâle lors de la poussée seulement sur le verrou, entre sa position complètement accouplée et sa position partiellement désaccouplée, qui permet à la fois de fermer le clapet et d'ouvrir des voies d'échappement pour ledit fluide.

## Revendications

1. Coupleur rapide, comportant une pièce mâle (10) et une pièce femelle (1, 3) dans laquelle la pièce mâle peut s'embrocher, la pièce femelle (1, 3) étant munie d'un verrou (7) comportant deux dents d'engagement (11, 12) disposées de part et d'autre de la pièce mâle pour coopérer avec des moyens d'engagement (14) de la pièce mâle de manière à produire un dégagement de la pièce mâle de la pièce femelle en deux phases correspondant à un seul enfoncement et un seul relâchement dudit verrou (7), ladite pièce femelle (1, 3) comportant un clapet d'obturation (5) qui est sollicité dans une position de fermeture lorsque les pièces mâle et femelle sont désaccouplées et qui est ouvert par la poussée de la pièce mâle (10) lors de son accouplement dans la pièce femelle (1, 3), le clapet d'obturation (5) comprenant une partie cylindrique vide (17), les deux dents (11, 12) étant séparées l'une de l'autre axialement d'une distance suffisante pour permettre un recul de la pièce mâle (10) par rapport à la pièce femelle (1, 3) lors d'un seul enfoncement du verrou (7) pour fermer le clapet (5), caractérisé en ce que la partie cylindrique vide (17) du clapet d'obturation (5) reçoit une partie frontale (24) de la pièce mâle (10) et comporte un joint d'étanchéité (6) destiné à rendre étanche l'accouplement entre le clapet (5) et la pièce mâle (10), cette partie cylindrique (17) comportant plusieurs ouvertures (27) radiales en aval dudit joint d'étanchéité (6) et en ce que le recul de la pièce mâle (10) par rapport à la pièce femelle (1, 3) lors d'un seul enfoncement du verrou (7) pour fermer le clapet dégage les ouvertures (27) pour permettre l'échappement de fluide sous pression en aval du clapet (5) fermé vers l'extérieur, tout en retenant la pièce mâle (10) dans la pièce femelle (1, 3), le relâchement du verrou (7) entraînant le dégagement de la pièce mâle (10) du verrou (7).

2. Coupleur selon la revendication 1, caractérisé en ce que la pièce femelle (1, 3) comporte un second joint d'étanchéité (4) destiné à rendre étanche l'intérieur de la pièce femelle (1, 3) vers l'extérieur lorsque le clapet (5) se trouve dans une position ouverte et à rendre en plus étanche ledit clapet (5) lorsqu'il se trouve dans sa position fermée.

3. Coupleur selon l'une des revendications 1 ou 2, caractérisé en ce que le clapet (5) comporte un cylindre vide comportant une partie de tête (16) fermée et ladite partie cylindrique (17), ladite partie cylindrique, (17) étant munie de trous (18) obturable par ledit second joint d'étanchéité (4) lorsque le clapet est fermé, ladite partie cylindrique (17) comportant deux parties à diamètre différent d'un alésage axial de ladite partie cylindrique formant entre elles un épaulement et une rainure circonférentielle qui sert de siège pour ledit joint d'étanchéité (6), la partie à diamètre supérieur de la partie cylindrique du clapet comportant les ouvertures (27) radiales en aval dudit joint d'étanchéité (6) et recevant une partie frontale (24) de la pièce mâle (10).

4. Coupleur selon la revendication 3, caractérisé en ce que la pièce femelle (1, 3) comporte un ressort (2) sollicitant le clapet (5) dans sa position de fermeture.

5. Coupleur selon la revendication 3 ou 4, caractérisé en ce que la partie de tête (16) du clapet (5) comporte une surface tronconique (19) qui est susceptible d'épouser une surface tronconique correspondante dudit autre joint d'étanchéité (4) lorsque le clapet (5) est fermé.

6. Coupleur selon l'une quelconque des revendications 1 à 5, caractérisé en ce que la pièce femelle (1, 3) comporte en une position avale par rapport au clapet (5) un alésage radial (21) recevant le verrou (7) qui comporte un cylindre percé d'un trou radial (22) pour le passage de la pièce mâle (10).

7. Coupleur selon la revendication 6, caractérisé en ce que le trou radial (22) du verrou (7) comporte des projections saillant vers l'intérieur du trou et formant des dents de blocage (11, 10).

8. Coupleur selon la revendication 7, caractérisé en ce que l'alésage radial (21) de la partie femelle (1, 3) s'ouvre d'un côté de la partie femelle (1, 3) par une ouverture suffisamment grande pour le passage du verrou (7) et à l'extrémité opposée dudit alésage radial (21) de la partie femelle (1, 3) se trouve une ouverture (28) plus petite en communication avec les ouvertures radiales (27) de la partie à diamètre supérieur de la partie cylindrique (17) du clapet (5), pour permettre l'échappement du fluide résiduel en aval du clapet, vers l'extérieur de la partie femelle avant le désaccouplement complet des parties mâle (10) et femelle (1, 3).

9. Coupleur selon la revendication 8, caractérisé en ce qu'il comprend une ouverture (29) aménagée dans la partie frontale de la pièce femelle ou toute autre ouverture permettant la décompression du fluide en aval du clapet (5).

## Patentansprüche

1. Schnellkupplung mit einem Steckerteil (10) und einem Buchsenteil (1, 3), in das das Steckerteil eingeschoben werden kann, wobei das Buchsenteil (1, 3) mit einem Sperrring (7) ausgestattet ist, der zwei Greifzähne (11, 12) aufweist, die zu beiden Seiten des Steckerteils angeordnet sind, um mit Greiforganen (14) des Steckerteils so zusammenzuwirken, dass ein Entkoppeln des Steckerteils vom Buchsenteil in zwei Phasen erfolgt, die einem einzigen Niederdrücken und einem einzigen Loslassen des benannten Sperrrings (7) entsprechen, wobei das benannte Buchsenteil (1, 3) ein Verschlussventil (5) umfasst, das in eine schliessende Stellung gedrückt wird, wenn Stecker- und Buchsenteil entkoppelt sind, aber durch den Schub des Steckerteils (10) geöffnet wird, wenn dieses in das Buchsenteil (1, 3) eingekoppelt wird, wobei das Verschlussventil (5) einen hohlzylindrischen Abschnitt (17) umfasst und die beiden Zähne (11, 12) axial genügend weit voneinander beabstandet sind, um während eines einzigen Niederdrückens des Sperrrings (7) einen Rückzug des Steckerteils (10) bezüglich des Buchsenteils (1, 3) zum Schliessen des Ventils (7) zu ermöglichen, dadurch gekennzeichnet, dass der hohlzylindrische Abschnitt (17) des Verschlussventils (5) einen vorderen Abschnitt (24) des Steckerteils (10) aufnimmt und eine Dichtung (6) enthält, die dazu bestimmt ist, die Kupplung zwischen dem Ventil (5) und dem Steckerteil (10) dicht zu gestalten, wobei dieser zylindrische Abschnitt (17) strömungsabwärts von der benannten Dichtung (6) mehrere radiale Öffnungen (27) hat, und dass der Rückzug des Steckerteils (10) bezüglich des Buchsenteils (1, 3) während eines einzigen Niederdrückens des Sperrrings (7) zum Schliessen des Ventils die Öffnungen (27) freigibt, um das Entweichen des unter Druck stehenden Fluids strömungsabwärts vom geschlossenen Ventil (5) nach aussen zu gestatten, während das Steckerteil (10) noch im Buchsenteil (1, 3) zurückgehalten wird, wobei das Loslassen des Sperrrings (7) die Abkopplung des Steckerteils (10) vom Sperrring (7) nach sich zieht.

2. Kupplung gemäss Anspruch 1, dadurch gekennzeichnet, dass das Buchsenteil (1, 3) eine zweite Dichtung (4) umfasst, die dazu bestimmt ist, das Innere des Buchsenteils (1, 3) nach aussen hin abzudichten, wenn sich das Ventil (5) in einer offenen Stellung befindet, und zusätzlich das benannte Ventil (5) zu dichten, wenn es sich in seiner geschlossenen Stellung befindet.

3. Kupplung gemäss einem der Ansprüche 1 oder 2, dadurch gekennzeichnet, dass das Ventil (5) einen Hohlzylinder mit einem geschlossenen Kopfabschnitt (16) und mit dem benannten zylindrischen Abschnitt (17) umfasst, wobei der benannte zylindrische Abschnitt (17) mit Löchern (18) versehen ist, die durch die benannte zweite Dichtung (4) verschlossen werden können, wenn das Ventil geschlossen ist, und wobei der benannte zylindrische Abschnitt (17) zwei Abschnitte einer axialen Bohrung des benannten zylindrischen Abschnitts mit verschiedenen Durchmessern umfasst, die zwischen sich einen Vorsprung und eine periphere Rille bilden, die als Sitz für die benannte Dichtung (6) dient, während der Abschnitt grösseren Durchmessers des zylindrischen Abschnitts des Ventils die radialen Öffnungen (27) strömungsabwärts von der benannten Dichtung (6) aufweist und einen vorderen Abschnitt (24) des Steckerteils (10) aufnimmt.

4. Kupplung gemäss Anspruch 3, dadurch gekennzeichnet, dass das Buchsenteil (1, 3) eine Feder (2) umfasst, die das Ventil (5) in seine geschlossene Stellung drückt.

5. Kupplung gemäss Ansprüchen 3 oder 4, dadurch gekennzeichnet, dass der Kopfabschnitt (16) des Ventils (5) eine kegelstumpfartige Fläche (19) aufweist, die sich an eine entsprechende kegelstumpfartige Fläche der benannten anderen Dichtung (4) anschmiegen kann, wenn das Ventil (5) geschlossen ist.

6. Kupplung gemäss einem beliebigen der Ansprüche 1 bis 5, dadurch gekennzeichnet, dass das Buchsenteil (1, 3) an einem Punkt strömungsabwärts vom Ventil (5) eine radiale Bohrung (21) aufweist, die den Sperrring (7) aufnimmt, der einen Zylinder umfasst, der von einem radialen Loch (22) für den Durchtritt des Steckerteils (10) durchbohrt wird.

7. Kupplung gemäss Anspruch 6, dadurch gekennzeichnet, dass das radiale Loch (22) des Sperrrings (7) Vorsprünge zum Inneren des Loches hin aufweist, die Verriegelungszähne (11, 10) bilden.

8. Kupplung gemäss Anspruch 7, dadurch gekennzeichnet, dass die radiale Bohrung (21) des Buchsenabschnitts (1, 3) auf der einen Seite des Buchsenabschnitts (1, 3) in eine genügend grosse Öffnung für den Durchtritt des Sperrrings (7) mündet und sich auf der entgegengesetzten Seite der benannten radialen Bohrung (21) des Buchsenabschnitts (1, 3) eine kleinere Öffnung (28) befindet, die mit den radialen Öffnungen (27) des Abschnitts grösseren Durchmessers des zylindrischen Abschnitts (17) des Ventils (5) in Verbindung steht, um das Entweichen des restlichen Fluids strömungsabwärts vom Ventil zur Aussenseite des Buchsenabschnitts zu gestatten, bevor Steckerabschnitt (10) und Buchsenabschnitt (1, 3) völlig entkoppelt sind.

9. Kupplung gemäss Anspruch 8, dadurch gekennzeichnet, dass sie eine in den vorderen Abschnitt des Buchsenteils eingelassene Öffnung (29) oder irgend eine andere Öffnung umfasst, die die Entspannung des Fluids strömungsabwärts vom Ventil (5) gestattet.

## Claims

1. A quick acting coupling, including a male piece (10) and a female piece (1, 3) into which the male piece can be inserted, the female piece (1, 3) being provided with a latch (7) carrying two engagement teeth (11, 12) placed on opposite sides of the male piece, to co-operate with engagement means (14) of the male piece, in such a manner as to produce a disengagement of the male piece from the female piece in two steps corresponding to a single insertion and a single release of said latch (7), said female piece (1, 3) including an obturator valve (5) which is biased towards a closed position when the male and female pieces are disengaged from each other and which is opened by the thrust of the male piece (10) during its coupling with the female piece (1, 3), the obturator valve (5) including an hollow cylindrical part (17), the two teeth (11, 12) being spaced apart axially by a distance sufficient to enable a backward motion of the male piece (10) relative to the female piece (1, 3) during the single insertion of the latch (7) to close the valve (5), characterised in that the hollow cylindrical part (17) of the obturator valve (5) receives a front part (24) of the male piece (lo) and includes a sealing member (6) intended for sealing the coupling of the calve (5) to the male piece (10), this cylindrical part (17) including several radial openings (27) downstream of said sealing member (6) and in that the backward motion of the male piece (10) relative to the female piece (1, 3), when carrying out the single insertion of the latch (7) to close the valve exposes the openings (27) to allow the escape of fluid under pressure downstream of the valve (5), closed to the outside, while retaining the male piece (10) inside the female piece (1, 3), the release of the latch (7) producing the disengagement of the male piece (10) from the latch (7).

2. A coupling according to claim 1, characterised in that the female piece (1, 3) includes a second sealing member (4) for sealing the inside of the female piece (1, 3) from the outside when the valve (5) is in the open position and to make the valve (5) better sealed when the same is in the closed position.

3. A coupling according to one of claims 1 or 2, characterised in that the valve (5) includes a hollow cylinder having a closed head part (16) and said cylindrical part (17), said cylindrical part (17) being provided with holes (18) which can be closed by said second sealing member (4) when the valve is closed, said cylindrical part (17) including an axial bore having two parts of different diameters forming a step therebetween and a circumferential groove acting to receive the sealing member (6), the part with the larger diameter of the cylindrical part of the valve including radial openings (27) downstream of said sealing member (6) and receiving a front part (24) of the male piece (10).

4. A coupling according to claim 3, characterised in that the female piece (1, 3) includes a spring (2) biasing the valve (5) into its closed position.

5. A coupling according to claim 3 or 4, characterised in that the head part (16) of the valve (5) includes a frustoconical surface (19) which matches a corresponding frustoconical surface of said other sealing member (4) when the valve (5) is closed.

6. A coupling according to any one of the claims 1 to 5, characterised in that the female piece (1, 3) has, in a downstream position with respect to the valve (5), a radial bore (21) receiving the latch (7) which comprises a cylinder with a radial through hole (22) for the passage of the male piece (10).

7. A coupling according to claim 6, characterised in that the radial hole (22) of the latch (7) includes protrusions extending inwardly of the hole and forming blocking teeth (11, 10).

8. A coupling according to claim 7, characterised in that the radial bore (21) of the female part (1, 3) opens on one side of the female part (1, 3) by an opening sufficiently large for the passage of the latch (7) and in that, at the opposite end of said radial bore (21) of the female part (1, 3), there is a smaller opening (28) in communication with the radial openings (27) of the part having a larger diameter of the cylindrical part (17) of the valve (5), to enable the escape of residual fluid downstream of the valve, outwards of the female part before the complete disengagement of the male part (10) from the female part (1, 3).

9. A coupling according to claim 8, characterised in that it includes an opening (29) provided in the front part of the female piece or any other opening making it possible to relieve the pressure of the fluid downstream of the valve (5).
